Europäisches Patentamt

European Patent Office

Office européen des brevets

(11) Veröffentlichungsnummer: **0 099 968**
**B1**

# EUROPÄISCHE PATENTSCHRIFT

(45) Veröffentlichungstag der Patentschrift:
**13.07.88**

(51) Int. Cl.⁴: **B 60 J 3/02**

(21) Anmeldenummer: **83104727.9**

(22) Anmeldetag: **13.05.83**

(54) Sonnenblende, insbesondere für Fahrzeuge, sowie Verfahren zu ihrer Herstellung.

(30) Priorität: **30.07.82 DE 3228495**

(43) Veröffentlichungstag der Anmeldung:
**08.02.84 Patentblatt 84/6**

(45) Bekanntmachung des Hinweises auf die Patenterteilung:
**13.07.88 Patentblatt 88/28**

(84) Benannte Vertragsstaaten:
**DE FR GB IT SE**

(56) Entgegenhaltungen:
**DE - A - 1 914 962**
**DE - A - 2 201 250**
**DE - A - 2 854 500**
**DE - B - 1 111 968**
**DE - C - 443 307**
**DE - C - 2 633 002**
**DE - U - 8 121 406**
**GB - A - 2 061 210**

(73) Patentinhaber: **Gebr. Happich GmbH,**
**Postfach 10 02 49 Clausenbrücke 1,**
**D-5600 Wuppertal 1 (DE)**

(72) Erfinder: **Viertel, Lothar, V. Gartenreihe 48,**
**D-6630 Saarlouis (DE)**
Erfinder: **Ebert, Charles, 7 Rue du Parc, F-Luxeuil (FR)**

## Beschreibung

Die Erfindung betrifft eine Sonnenblende, insbesondere für Fahrzeuge, deren Sonnenblendenkörper eine darin eingebettete Verstärkungseinlage aufweist, die aus einem zu einem etwa rechteckigen Rahmen gebogenen Draht besteht, wobei zumindest in einem Eckbereich des Rahmens ein damit verbundenes, ebenfalls im Sonnenblendenkörper eingebettetes, als Kunststoffspritzgussteil ausgebildetes Lagergehäuse angeordnet ist, welches eine Sonnenblendenachse lagert. Die Erfindung betrifft weiterhin ein Verfahren zum Herstellen der Sonnenblende.

Verstärkungseinlagen zur Aussteifung von Sonnenblendenkörpern sind als Vollkunststoffrahmen mit angeformten Lagern (vgl. DE-C-2 633 002), als Drahtrahmen mit daran angenieteten oder angeschweissten Blechlagern (vgl. DE-B-1 111 968) und als Drahtrahmen mit daran angeordneten Kunststofflagern (vgl. DE-C-2 443 307) bekannt und gebräuchlich. Die Erfindung hat sich die Verbesserung der zuletzt genannten Gattung zum Ziel gesetzt.

Die bekannte Sonnenblende gemäss DE-C-2 443 307 weist einen im Sonnenblendenkörper eingelagerten Drahtrahmen und ein im Sonnenblendenkörper eingelagertes, als Haltekörper bezeichnetes Lagergehäuse, welches als Kunststoffspritzgussteil ausgeführt ist, auf. Das zur Steckaufnahme der Sonnenblendenachse dienende Lagergehäuse ist mit dem Drahtrahmen relativ starr verbunden. Für die Herstellung der Verbindung ist das Lagergehäuse mit mindestens zwei Drahtaufnahmen derart ausgebildet, dass der Draht durch eine Schwenkbewegung am Lagergehäuse anbringbar ist.

Obgleich sich die Sonnenblende gem. der DE-C-2 443 307 in der Praxis an sich hervorragend bewährt hat, ist sie im Hinblick auf die Herstellungskosten verbesserungsbedürftig. Die besondere Ausbildung des Lagergehäuses erleichtert zwar die Montage des am Lagergehäuse festzulegenden Drahtrahmens, jedoch wird dieser Vorteil durch die dafür erforderliche, recht komplizierte Ausbildung des Lagergehäuses wieder aufgezehrt.

Die der Erfindung zugrundeliegende Aufgabe besteht nun darin, bei einer Sonnenblende der eingangs genannten Art eine einfach herzustellende Verbindung zwischen dem Lagergehäuse und dem Drahtrahmen zu schaffen, wobei insbesondere die Einsparung von Arbeitsschritten und eine vereinfachte Gestaltung des Lagergehäuses angestrebt wird.

Zur Lösung dieser Aufgabe ist erfindungsgemäss vorgesehen, dass das Lagergehäuse unmittelbar an den Rahmen angespritzt ist, wobei vorzugsweise der mit dem Lagergehäuse verbundene Rahmenbereich vollständig im Lagergehäuse eingelagert ist.

Die erfindungsgemässe Massnahme erbringt eine Vereinfachung und echte Kosteneinsparung bei der Sonnenblendenherstellung, was als überraschend angesehen werden muss; denn es war nicht zu erwarten, dass eine Verlängerung der Taktzeit beim Spritzgiessen der Lagergehäuse, die ja durch das erforderliche Einlegen der Drahtrahmen in die Spritzgiessform in Kauf zu nehmen ist, eine Verbilligung begründen könnte. Tatsächlich hat sich aber herausgestellt, dass die vereinfachte Formgebung des Lagergehäuses, das nunmehr keine Aufnahmekanäle, Hinterschneidungen, Klipsnasen u.dgl. mehr für die Halterung des Drahtrahmens aufweisen muss, da es ja gemäss der Erfindung unmittelbar auf den Drahtrahmen aufgespritzt wird, in Verbindung mit der nunmehr eingesparten Lagerhaltung von separat hergestellten Lagergehäusen und insbesondere in Verbindung mit dem nunmehr eingesparten Arbeitsgang der nachträglichen Zusammenfügung von Drahtrahmen und Lagergehäuse, die Herstellungskosten in einer schon interessanten Grössenordnung herabmindert. Mit Rücksicht darauf, dass es sich bei Sonnenblenden der in Rede stehenden Art um ausgesprochene Massenartikel handelt, können auch schon geringe Kosteneinsparungen hinsichtlich der Wettbewerbsfähigkeit wesentlich sein.

Bevorzugterweise sind gemäss der Erfindung die Enden des den Rahmen bildenden Drahtes im Lagergehäuse eingelagert. Damit sind die Drahtenden, ohne dass es einer Schweissarbeit od.dgl. bedarf, eben durch das Lagergehäuse aneinander festgelegt.

Weiterhin ist es von Vorteil, wenn in Ausgestaltung der Erfindung die Drahtendbereiche des Rahmens sich überlappen und abgewinkelte Endstücke aufweisen, welche im Lagergehäuse eingelagert sind, weil sich hierdurch eine erhöhte Ausreissfestigkeit ergibt.

Eine weitere wesentliche erfindungsgemässe Massnahme ist darin zu sehen, dass das Lagergehäuse eine durch Umspritzen eingelagerte, die Sonnenblendenachse beaufschlagende Feder aufweist. Eine die Sonnenblendenachse beaufschlagende Feder, durch die der Sonnenblendenkörper in jeder möglichen Klapplage gehalten werden soll, ist bei allen eingangs erwähnten Sonnenblenden vorgesehen. Jedoch muss die Feder bei den bekannten Sonnenblenden, im Gegensatz zur Erfindung, nachträglich montiert werden. Weiter müssen die Federn, die für die bekannten Sonnenblenden verwendet werden, Mittel für ihre Festlegung am Lagergehäuse aufweisen, was ihre Ausbildung komplizierter macht und ihre Herstellung verteuert.

Die Erfindung wird dadurch, dass neben der vorteilhaften Massnahme, das Lagergehäuse unmittelbar an den Rahmen anzuspritzen, nun gleichzeitig auch eine Momentenfeder miteinzuspritzen, vervollkommnet, denn dadurch kann nunmehr die Feder einen relativ einfachen Grundaufbau aufweisen und sie braucht nicht mehr nachträglich montiert zu werden.

Weitere wesentliche Massnahmen der Erfindung sind in den Ansprüchen 6 bis 10 gekennzeichnet.

Ein Ausführungsbeispiel der Erfindung wird nachfolgend anhand der Zeichnung näher erläutert. Es zeigen

Fig. 1 den Abschnitt eines Sonnenblendenkörpers in einem Lagerbereich,

Fig. 2 eine Draufsicht auf das Lagergehäuse nach Fig. 1 und

Fig. 3 im wesentlich vergrösserten Massstab einen Schnitt A–A nach Fig. 1.

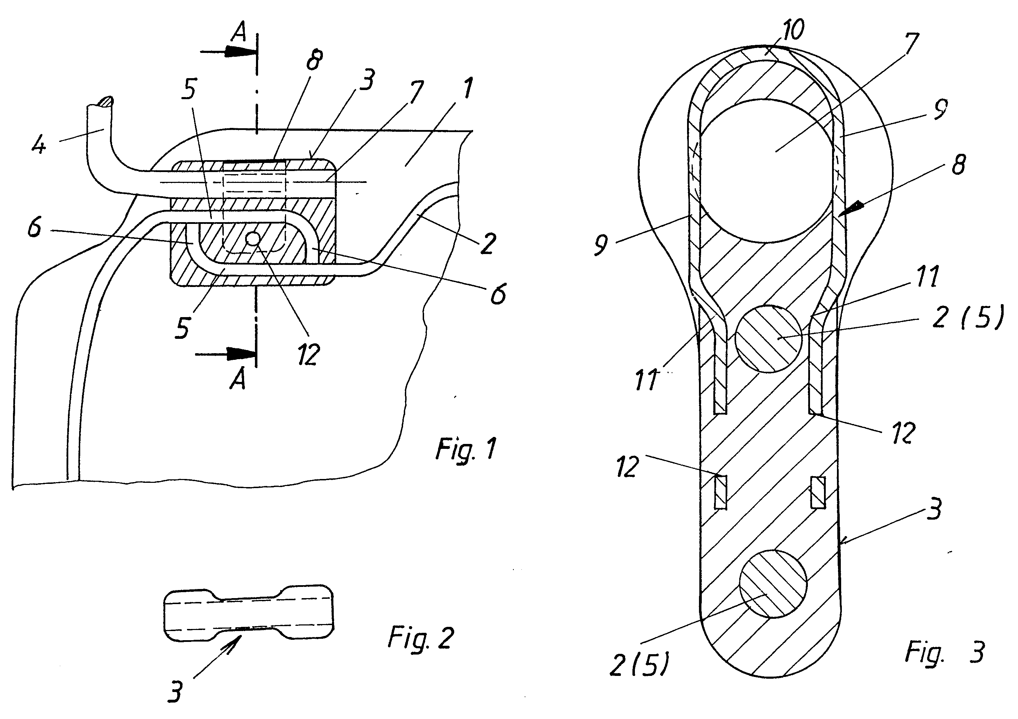

Fig. 1 zeigt bereichsweise einen Sonnenblendenkörper 1 mit einem darin eingebetteten aus Draht gebildeten Verstärkungsrahmen 2 und einem Lagergehäuse 3, welches eine Lagerachse 4 lagert.

Der Verstärkungsrahmen 2 besitzt eine etwa rechteckige Grundform und ist nahe des Umfangsrandes des Sonnenblendenkörpers 1 in diesem eingebettet. Der Verstärkungsrahmen 2 ist fest mit dem Lagergehäuse 3, welches aus einem Kunststoffspritzgusskörper besteht, verbunden. Die feste Verbindung zwischen dem Verstärkungsrahmen 2 und dem Lagergehäuse 3 wird erfindungsgemäss dadurch erzielt, dass das Lagergehäuse 3 unmittelbar an den Drahtrahmen 2 angespritzt ist. Vorzugsweise sind dabei die Endbereiche 5 des Drahtrahmens 2, die sich überlappen und mit abgewinkelten Endstücken 6 ausgebildet sind, im Lagergehäuse 3 eingelagert. Die im Lagergehäuse 3 vorzusehenden Aufnahmen für die darin einzulagernden Drahtbereiche des Verstärkungsrahmens 2 bilden sich durch das Umspritzen von selbst. Zu beachten ist daher bei dem Spritzgiessen des Lagergehäuses 3 lediglich die exakte Ausbildung der die Lagerachse 4 aufnehmenden Lagerbohrung 7 und die Einhaltung von äusseren Abrundungsradien von mindestens 3,2 mm, die aufgrund entsprechender Verordnungen und Vorschriften nicht unterschritten werden dürfen.

Eine Besonderheit der Erfindung besteht darin, dass das Lagergehäuse 3 nicht nur Teilbereiche des Verstärkungsrahmens 2, sondern auch eine Momentenfeder 8 durch Umspritzen einlagert. Die Feder 8 ist als U-förmig gebogene Blattfeder mit den Seitenschenkeln 9 und dem Steg 10 ausgebildet. Im etwa mittigen Bereich weisen die Seitenschenkel 9 eine Verkröpfung 11 auf, die derart ausgebildet ist, dass die freien Endbereiche der Seitenschenkel 9 einen geringeren Parallelabstand als die sich unmittelbar an den Steg 10 anschliessenden Bereiche aufweisen. Die freien Endbereiche der Seitenschenkel 9 sind vollständig im Lagergehäuse 3 eingelagert und durch darin vorgesehene Durchbrüche 12 vom Kunststoffmaterial durchsetzt, während der übrige Bereich der Feder 8 aussenseitig freiliegt und nur in dem Bereich zwischen den Seitenschenkeln 9 und dem Steg 10, bis auf eine Lagerbohrung 7 für die Lagerachse 4, vom Kunststoffmaterial des Lagergehäuses 3 ausgefüllt ist.

Der Abstand der an dem Steg 10 unmittelbar angrenzenden Seitenschenkelbereiche ist kleiner als der Durchmesser der Lagerbohrung 7. Da die Feder 8 in diesem Bereich jedoch keine aussenseitige Abstützung aufweist, können die Seitenschenkel 9 beim Einstecken der Lagerachse 4 federelastisch nach aussen ausweichen. Die Feder 8 wirkt nicht nur als Reibungsbremse, sondern sichert die Lagerachse 4 auch gegen ein Herausziehen aus der Lagerbohrung 7, indem sie sich an durch Abflachungen der Lagerachse gebildete Schultern (nicht gezeigt) der Lagerachse abstützt.

Bei der Herstellung der Sonnenblende wird zunächst ein Drahtabschnitt in einer Ebene zu einem etwa rechteckigen Rahmen gebogen. Dieser Drahtrahmen 2 wird mit einem Teilbereich, vorzugsweise mit dem die Endabschnitte aufweisenden Teilbereich in das Formnest einer Kunststoffspritzgussmaschine eingelegt. Weiterhin wird in das Formnest die zuvor U-förmig aus einem Federstahlblech gebogene Feder 8 eingelegt und durch einen zwischen ihren Seitenschenkeln hindurchgeführten Zapfen, welcher die Lagerbohrung 7 bildet, lagezentriert gehalten. Nachdem das Formnest geschlossen worden ist, wird um den darin befindlichen Rahmenbereich und um die Feder herum das Lagergehäuse 3 spritzgegossen. Der nun mit Lagergehäuse 3 komplettierte Verstärkungsrahmen wird anschliessend in herkömmlicher Weise mit einer Umpolsterung versehen.

**Patentansprüche**

1. Sonnenblende, insbesondere für Fahrzeuge, deren Sonnenblendenkörper (1) eine darin eingebettete Verstärkungseinlage aufweist, die aus einem zu einem etwa rechteckigen Rahmen (2) gebogenen Draht besteht, wobei zumindest in einem Eckbereich des Rahmens (2) ein damit verbundenes, ebenfalls im Sonnenblendenkörper (1) eingebettetes als Kunststoffspritzgussteil ausgebildetes Lagergehäuse (3) angeordnet ist, welches eine Sonnenblendenachse (4) lagert, dadurch gekennzeichnet, dass das Lagergehäuse (3) unmittelbar an den Rahmen (2) angespritzt ist.

2. Sonnenblende nach Anspruch 1, dadurch gekennzeichnet, dass der mit dem Lagergehäuse (3) verbundene Rahmenbereich vollständig im Lagergehäuse (3) eingelagert ist.

3. Sonnenblende nach Anspruch 1 oder 2, dadurch gekennzeichnet, dass die Enden (5, 6) des den Rahmen (2) bildenden Drahtes im Lagergehäuse (3) eingelagert sind.

4. Sonnenblende nach einem oder mehreren der Ansprüche 1 bis 3, dadurch gekennzeichnet, dass die Drahtendbereiche (5) des Rahmens (2) sich überlappen und abgewinkelte Endstücke (6) aufweisen, welche im Lagergehäuse (3) eingelagert sind.

5. Sonnenblende nach einem oder mehreren der Ansprüche 1 bis 4, dadurch gekennzeichnet, dass das Lagergehäuse (3) eine durch Umspritzen eingelagerte, die Sonnenblendenachse (4) radial beaufschlagende Feder (8) aufweist.

6. Sonnenblende nach einem oder mehreren der Ansprüche 1 bis 5, dadurch gekennzeichnet, dass die Feder (8), die etwa U-förmig ausgebildet ist, nur mit den freien Endbereichen ihrer Seitenschenkel (9) im Lagergehäuse (3) verankert ist, während die die Sonnenblendenachse (4) auf diametral gegenüberliegenden Seiten tangierenden, dem Steg (10) benachbarten Bereiche der Seitenschenkel (9) ebenso wie der Steg (10) aussenseitig freiliegen.

7. Sonnenblende nach einem oder mehreren der Ansprüche 1 bis 6, dadurch gekennzeichnet, dass das Lagergehäuse (3) den Raum zwischen den Seitenschenkeln (9) und dem Steg (10) der Feder (8) bis auf die Durchlassöffnung (7) für die Sonnenblendenachse (4) ausfüllt.

8. Sonnenblende nach einem oder mehreren der Ansprüche 1 bis 7, dadurch gekennzeichnet, dass die Seitenschenkel (9) der Feder (8) jeweils eine etwa mittig verlaufende Abkröpfung (11) und dadurch die freien, im Lagergehäuse (3) verankerten Endbereiche der Seitenschenkel (9) einen geringeren Parallelabstand voneinander aufweisen als die dem Steg (10) unmittelbar benachbarten Bereiche.

9. Sonnenblende nach einem oder mehreren der Ansprüche 1 bis 8, dadurch gekennzeichnet, dass die im Lagergehäuse (3) verankerten Endbereiche der Seitenschenkel (9) der Feder (8) jeweils zumindest eine Durchgangsöffnung (12) aufweisen.

10. Verfahren zum Herstellen einer Sonnenblende nach einem der vorangehenden Ansprüche, insbesondere nach den Ansprüchen 1 bis 6, gekennzeichnet durch die Arbeitsschritte:

a) Ein Drahtabschnitt wird in einer Ebene zu einem etwa rechteckigen Rahmen gebogen,

b) der Rahmen wird in eine Spritzgussmaschine derart eingespannt, dass ein Teilbereich innerhalb des Formnestes berührungsfrei zu liegen kommt,

c) in das Formnest wird eine zuvor aus einem Federblech in eine U-Form gebogene Feder eingelegt und durch einen zwischen ihren Seitenschenkeln hindurchgeführten Zapfen lagezentriert gehalten, und

d) um den im Formnest befindlichen Rahmenbereich und um die Feder herum wird nun das Lagergehäuse spritzgegossen.

**Claims**

1. A sun visor, more particularly for vehicles, comprising a body (1) in which a reinforcing insert is embedded and comprises a wire bent into a substantially rectangular frame (2), a bearing casing (3) for receiving a sun-visor pivot (4) being in the form of a plastics injection-moulded part embedded in the visor body (1) and disposed in at least one corner region of the frame (2) and connected thereto, characterised in that the bearing casing (3) is injection-moulded directly on to the frame (2).

2. A sun visor according to claim 1, characterised in that the part of the frame connected to the bearing casing (3) is completely encased therein.

3. A sun visor according to claim 1 or 2, characterised in that the ends (5, 6) of the wire forming the frame (2) are encased in the bearing casing (3).

4. A sun visor according to one or more of claims 1 to 3, characterised in that the end regions (5) of the frame (2) overlap and have bent end portions (6) which are encased in the bearing casing (3).

5. A sun visor according to one or more of claims 1 to 4, characterised in that the bearing casing (3) comprises a spring (8) encased by injection-moulding and acting radially on the sun-visor pivot (4).

6. A sun visor according to one or more of claims 1 to 5, characterised in that the spring (8), which is approximately U-shaped, has only the projecting end regions of its side arms (9) anchored in the casing (3), whereas the regions of the side arms (9) adjacent the web (10) and touching the sun-visor pivot (4) on diametrically opposite sides are externally exposed, and so is the web (10).

7. A sun visor according to one or more of claims 1 to 6, characterised in that the casing (3) fills the space between the side arms (9) and the web (10) of spring (8) except for the bore (7) for receiving the sun-visor pivot (4).

8. A sun visor according to one or more of claims 1 to 7, characterised in that the side arms (9) of the spring (8) each have an approximately central offset (11) so that the parallel distance between the projecting end regions of the side arms (9) anchored in the casing (3) is less than between the regions immediately adjacent the web (10).

9. A sun visor according to one or more of claims 1 to 8, characterised in that the end regions of the side arms (9) of spring (8) anchored in casing (3) each have at least one through opening (12).

10. A method of manufacturing a sun visor according to any of the preceding claims, more particularly claims 1 to 6, characterised by the following steps:

a) a wire portion is bent in a plane into an approximately rectangular frame;

b) the frame is clamped in an injection moulding machine so that part of it lies inside the mould cavity but without contact;

c) a spring made of sheet metal bent into a U is inserted into the mould cavity and held in centred position by a spigot inserted between its side arms, and

d) the bearing casing is injection-moulded around the spring and the frame area in the mould cavity.

**Revendications**

1. Pare-soleil, notamment pour véhicules, dont le corps (1) comprend une garniture de renforcement, noyée à l'intérieur et constituée par un fil recourbé formant un cadre (2) sensiblement rectangulaire, un logement de palier (3), constitué sous forme d'une pièce en matière plastique moulée par injection et dans lequel est monté un axe du pare-soleil étant disposé dans au moins une région d'angle du cadre (2) et relié à ce dernier en étant également noyé dans le corps (1) du pare-soleil, caractérisé en ce que le logement de palier (3) est moulé par injection directement sur le cadre (2).

2. Pare-soleil selon la revendication 1, caractérisé en ce que la région du cadre qui est reliée au logement de palier (3) est totalement incorporée dans le logement de palier (3).

3. Pare-soleil selon la revendication 1 ou 2, caractérisé en ce que les extrémités (5, 6) du fil formant le cadre (2) sont incorporées dans le logement de palier (3).

4. Pare-soleil selon une ou plusieurs des revendications 1 à 3, caractérisé en ce que les régions d'extrémité (5) du fil du cadre (2) se chevauchent et présentent des parties d'extrémité coudées (6) qui sont incorporées dans le logement de palier (3).

5. Pare-soleil selon une ou plusieurs des revendications 1 à 4, caractérisé en ce que le logement de palier (3) comprend un ressort (8) incorporé par injection et exerçant une sollicitation en direction radiale sur l'axe (4) du pare-soleil.

6. Pare-soleil selon une ou plusieurs des revendications 1 à 5, caractérisé en ce que le ressort (8) qui est sensiblement en forme de U n'est ancré dans le logement de palier (3) que par les régions d'extrémité libres de ses branches latérales (9), alors que les régions des branches latérales (9) qui sont voisines de la partie de dos (10) et qui sont tangentes aux côtés situés diamétralement à l'opposé de l'axe (4) du pare-soleil sont disposées librement à l'extérieur, comme l'est la partie de dos (10).

7. Pare-soleil selon une ou plusieurs des revendications 1 à 6, caractérisé en ce que le logement de palier (3) remplit l'espace compris entre les branches latérale (9) et la partie de dos (10) du ressort (8) jusqu'à l'ouverture de passage (7) destinée à l'axe (4) du pare-soleil.

8. Pare-soleil selon une ou plusieurs des revendications 1 à 7, caractérisé en ce que les branches latérales (9) du ressort (8) comprennent chacune une partie coudée (11) sensiblement en leur centre et en ce que les régions d'extrémité libres des branches latérales (9) qui sont ancrées dans le logement de palier (3) sont situées parallèlement à une distance plus faible l'une de l'autre que les régions directement voisines de la partie de dos (10).

9. Pare-soleil selon une ou plusieurs des revendications 1 à 8, caractérisé en ce que les régions d'extrémité des branches latérale (9) du ressort (8) qui sont ancrées dans le logement de palier (3) comprennent chacune au moins une ouverture de passage (12).

10. Procédé de fabrication d'un pare-soleil selon l'une quelconque des revendications précédentes, notamment selon les revendications 1 à 6, caractérisé par les opérations suivantes:

a) une section de fil est repliée dans un plan pour former un cadre sensiblement rectangulaire,

b) le cadre est serré dans une machine de moulage par injection de manière qu'une région partielle vienne se placer sans contact à l'intérieur de la cavité du moule,

c) on incorpore préalablement dans cette cavité du moule un ressort constitué par une tôle à ressort repliée en U et on le maintient centré en position par un tourillon que l'on fait passer entre ses branches latérale, et

d) on moule par injection le logement de palier autour de la région du cadre se trouvant dans la cavité du moule et autour du ressort.

Fig. 3

Fig. 1

Fig. 2